# EUROPÄISCHE PATENTSCHRIFT

(11) **EP 1 781 494 B1**
(45) Veröffentlichungstag und Bekanntmachung des Hinweises auf die Patenterteilung: **13.02.2008**
(21) Anmeldenummer: 05772852.9
(22) Anmeldetag: 14.07.2005
(51) Int. Cl.: B60Q 1/22, H04N 5/235

(54) **RÜCKLICHT FÜR APPARATE ZUR BEFÖRDERUNG AUF DEM LANDE**
TAIL LIGHT FOR RURAL TRANSPORTATION MEANS
FEU ARRIERE POUR APPAREILS DE TRANSPORT RURAL

(30) Priorität: 19.07.2004 DE 102004034805
(43) Veröffentlichungstag der Anmeldung: 09.05.2007
(73) Patentinhaber: Scholten, Ludwig, 6029 RD Sterksel (NL)
(72) Erfinder: SCHOLTEN, Ludwig, 6029 RD Sterksel (NL); REFLE, Franz, 86673 Villenbach (DE)
(74) Vertreter: Sparing Röhl Henseler Patentanwälte European Patent Attorneys
(86) Internationale Anmeldenummer: PCT/EP2005/007664
(87) Internationale Veröffentlichungsnummer: WO 2006/008065

(56) Entgegenhaltungen:
- US-A1- 2002 118 282
- US-A1- 2004 046 653
- US-A1- 2004 124 659

## Beschreibung

Die Erfindung betrifft ein Rücklicht für Apparate zur Beförderung auf dem Lande nach dem Oberbegriff des Anspruchs 1.

Derartige Rücklichter dienen der visuellen Kenntlichmachung der Apparate nach hinten, um Dritte zu warnen und die Sicherheit des Führers des Apparates vor rückwärtigem Verkehr zu gewährleisten. Rücklichter sind deshalb mit einem Leuchtmittel und/oder Reflektorflächen versehen, die erzeugtes und/oder einfallendes Licht nach hinten abstrahlen. Als nachteilig erwiesen hat sich, daß die Warnfunktion der Rücklichter nicht hinreichend ist. Dies gilt insbesondere bei einer Verwendung der Rücklichter an Fahrrädern und Motorrädern.

Aus DE 100 10 434 A1 ist eine Kameravorrichtung in einer dritten Bremswarnleuchte in einem Kraftfahrzeug gesehen, die zur Überwachung des rückwärtigen Fahrraums dient, wobei durch die Anordnung in der dritten Bremswarnleuchte einerseits die Überwachung des rückwärtigen Fahrraumes und andererseits eine einfache Montage einer Kameravorrichtung ermöglicht wird. Die dritte Bremswarnleuchte umfaßt eine Kamera bestehend aus einem Objektiv und einer Auswerteeinrichtung. Die Auswerteeinrichtung und das Objektiv befinden sich in einem Gehäuse. Die Auswerteeinrichtung ermöglicht eine elektronische Erfassung des durch das Objektiv erzeugten Bildes, vorzugsweise durch einen CCD-Chip oder durch einen CMOS-Chip. Der Randbereich, in den das Objektiv eingepaßt ist, ist angeschrägt und an die Heckscheibe angepaßt, so daß das Gehäuse der dritten Bremswarnleuchte bündig an die Heckscheibe anschließt. In einem bevorzugten Ausführungsbeispiel ist das Gehäuse über den Randbereich an die Heckscheibe geklebt.

Aus US2004/046653 ist auch eine Kameravorrichtung in einem Rücklicht bekannt.

Aufgabe der Erfindung ist es, Rücklichter zu schaffen, die verbesserte Warnsignale liefern.

Diese Aufgabe wird durch die Merkmale des kennzeichnenden Teils des Anspruchs 1 gelöst.

Hierdurch wird ein Rücklicht geschaffen, das den rückwärtigen Verkehr abbildet und die elektronischen Einrichtungen zur Bildverarbeitung integriert, so daß mittels einer Steckerbelegung des Rücklichts Bilddaten an individuell wählbare und positionierbare Bildschirme übertragbar sind. Der Führer eines Apparates zur Beförderung auf dem Lande erhält somit Informationen über den rückwärtigen Verkehr dauerhaft übertragen, wodurch dieser visuelle Warnsignale bei Gefahrensituationen erhält.

Der vorzugsweise Einsatz einer PC-Technik in Form eines Mainboards erlaubt den Einsatz einer preiswerten USB-Kamera und den direkten Anschluß eines TFT-Displays. Alle technischen Forderungen, insbesondere an eine flüssige Videodarstellung des rückwärtigen Verkehrs, werden erfüllt. Außerdem werden sämtliche Standardschnittstellen eines PCs bereitgestellt, so daß sich die Adaption weiterer Hardware vom GPS-Empfänger über GSM-Modem etc. bis hin zu verschiedenen Sensoren problemlos gestaltet. Außerdem bietet diese Lösung genügend Rechenleistung, um die Bildstabilisierung zuverlässig sicherzustellen, was im Hinblick auf die auftretenden Erschütterungen vorteilhaft ist. Weiterhin erlaubt das PC-Mainboard eine Optimierung auf geringen Stromverbrauch.

Die Gegenlichtkorrektur braucht bei einem solchen Kameramodul nicht mehr als Helligkeitsanpassung des gesamten Bildes zu erfolgen, sondern kann zumindest in zwei Segmenten, nämlich Bildmitte und Randzone, durchgeführt werden, was zu einer deutlichen Verbesserung bei voller Sonneneinstrahlung führt. Kontrast-und detailreiche Bilder können sichergestellt werden.

Aufgrund des integrierten Signalprozessors besitzt das Kameramodul auch die Möglichkeit, die hier so wichtige Spiegelfunktion des aufgenommenen Bildes zu nutzen. Damit entfällt ein externer Spiegel.

Die Integration eines Signalprozessors kann schließlich neben den beiden Grundfunktionen der Gegenlichtkorrektur und Spiegelung des Bildes auch den Einbau eines Zooms ermöglichen.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

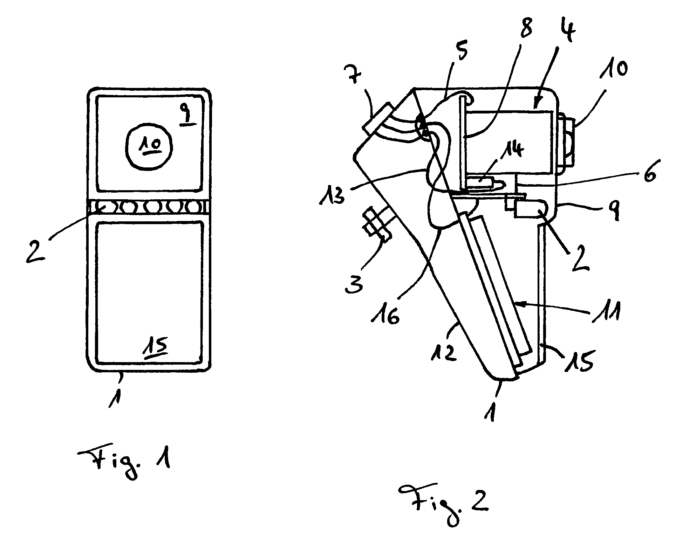

Fig. 1 zeigt schematisch eine Vorderansicht eines Rücklichtes,
Fig. 2 zeigt schematisch und geöffnet eine Seitenansicht des Rücklichtes gemäß Fig.1,
Fig. 3 zeigt ein Blockschaltbild der Funktionselemente des Rücklichtes gemäß Fig. 1.

Die Erfindung betrifft ein Rücklicht für Apparate zur Beförderung auf dem Lande mit einem Gehäuse 1, in dem ein Leucht- und/oder Strahlermittel 2 angeordnet ist. An dem Gehäuse 1 ist eine Befestigungseinrichtung 3 vorgesehen, um das Gehäuse 1 an einem nicht dargestellten Halter, wie z.B. einem Schutzblech, anbringen zu können.

In das Gehäuse 1 ist ein Kameramodul 4 mit integiertem Signalprozessor für eine elektronische Bildverarbeitung einschließlich Gegenlichtkorrektur- und Bildstabilisierungsschaltung eingesetzt. Das Kameramodul 4 besitzt einen Videoausgang 5 und einen Versorgungsspannungseingang 6, die an einen Steckverbinder 7 am Gehäuses 1 anschließbar sind. Das Rücklicht ist damit eine Moduleinheit, die nach dem plug-in Prinzip mit einem Bildschirm verbindbar ist.

Derartige Rücklichter können insbesondere an Fahrrädern, Motorrädern und Wohnmobilen Verwendung finden, um den rückwärtigen Verkehr oder die rückwärtigen Geschehnissen visuell erfassen zu können. Die so gewonnenen Bilder können auf Bildschirme übertragen werden, die in das Blickfeld einer in eine Fahrtrichtung blickenden Person gesetzt sind.

Das Kameramodul 4 umfaßt vorzugsweise ein Signalprozessor-Mainboard 8, an das eine Kamera mit einem in eine Abdeckung 9 des Gehäuses 1 einsetzbaren Objektiv 10 angeschlossen ist. Der integrierte Signalprozessor umfaßt ferner vorzugsweise eine Zoomeinheit. Die Spannungsversorgung des Kameramoduls 4 erfolgt über eine Moduleinheit 11, die von einem Wandler gebildet wird und über die auch das Leucht- und/oder Strahlermittel 2 versorgt wird. Dazu besitzt die Moduleinheit 11 einen Spannungsversorgungsanschluß 16, über den der Spannungsversorgungseingang 6 des Kameramoduls 4 an den Steckverbinder 7 anschließbar ist. Das Leucht- und/oder Strahlermittel 2 besteht vorzugsweise aus einer oder mehreren Leuchtdioden.

Die Abdeckung 9 des Gehäuses 1 umfaßt vorzugsweise einen oberen durchscheinenden Abschnitt, hinter dem das Leucht- und/oder Strahlermittel 2 angeordnet ist. Vorzugsweise ist in diesem oberen Abschnitt und benachbart zum Leucht- und/oder Strahlermittel 2 das Objektiv 10 angeordnet. Unterhalb des oberen Abschnitts umfaßt die Abdeckung 9 vorzugsweise einen Reflektorabschnitt 15, auch Katzenauge genannt. Hinter diesem Reflektorabschnitt 15 findet sich ein Raum zur Aufnahme der Moduleinheit 11 für die Spannungsversorgung zwischen Reflektorabschnitt 15 und einer Gehäuserückwand 12.

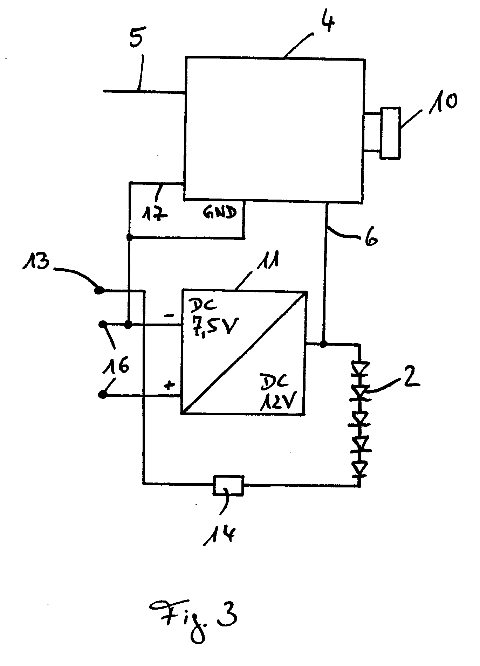

Wie aus dem Blockschaltbild der Fig. 3 ersichtlich, gliedert sich das System in die Unterbaugruppen aus Kameramodul 4, Leucht- und/oder Strahlermittel 2 und Moduleinheit 11, die von einem DC/DC-Wandler für das Kameramodul 4 und das Leucht- und/oder Strahlermittel 2 gebildet wird.

Als Stromversorgung kann ein handelsübliches Akkupack und/oder ein Dynamo dienen, die die erforderliche Betriebsspannung liefern. Die Moduleinheit 11 setzt die Versorgung zum Betrieb des Kameramoduls 4 und der LEDs 2 hoch. Schließlich kann noch eine Schalterschaltung 13 vorgesehen sein, mit der das Kameramodul 4 und/oder das Leucht- und/oder Strahlermittel 2 ein-/ausgeschaltet werden kann. Ein geeigneter Widerstand 14 ist hier einsetzbar.

Weiterhin ist eine Spiegelschaltung in dem Kameramodul 4 vorgesehen, für die ein separater Spannungsversorgungseingang 17 vorgesehen sein kann, um die Spiegelfunktion je nach Einsatz des Rücklichtes aktivieren oder deaktivieren zu können.

## Patentansprüche

1. Rücklicht für Apparate zur Beförderung auf dem Lande mit einem Gehäuse (1), einem Leucht- und/oder Strahlermittel (2) und einer Befestigungseinrichtung (3) zur Anbringung des Gehäuses (1) an einem Halter, wobei in das Gehäuse (1) ein Kameramodul (4) mit integriertem Signalprozessor für eine elektrische Bildverarbeitung eingesetzt ist wobei ein Versorgungsspannungseingang (6) des Kameramoduls mit einem Steckverbinder (7) am Gehauze verbindbar ist, **dadurch gekennzeichnet, daß** das Kameramodul (4) eine Gegenlichtkorrektur- und Bildstabilisierungsschaltung aufweist, und daß ein Videoausgang (5) des Kameramoduls (4) mit dem Steckverbinder (7) am Gehäuse (1) verbindbar sind.

2. Rücklicht nach Anspruch 1, **dadurch gekennzeichnet, daß** das Kameramodul (4) eine Signalprozessor-Hauptplatine (8) umfaßt, an die eine Kamera mit einem in eine Abdeckung (9) des Gehäuses (1) einsetzbaren Objektiv (10) anschließbar ist.

3. Rücklicht nach Anspruch 1 oder 2, **dadurch gekennzeichnet, daß** das Kameramodul (4) eine Spiegelschaltung umfaßt.

4. Rücklicht nach einem der Ansprüche 1 bis 3, **dadurch gekennzeichnet, daß** das Kameramodul (4) eine Zoomschaltung umfaßt.

5. Rücklicht nach einem der Ansprüche 1 bis 4, **dadurch gekennzeichnet, daß** das Kameramodul (4) und ein Leuchtmittel (2) an einen gemeinsamen Spannungsversorgungsanschluß (16) anschließbar sind.

6. Rücklicht nach einem der Ansprüche 1 bis 5, **dadurch gekennzeichnet, daß** das Kameramodul (4) ein Objektiv (10) umfaßt, das in eine Abdeckung (9) des Gehäuses (1) benachbart eines Reflektorabschnitts (15) einsetzbar ist.

7. Rücklicht nach einem der Ansprüche 1 bis 6, **dadurch gekennzeichnet, daß** das Kameramodul (4) ein Objektiv (10) umfaßt, das mit dem Leuchtmittel (2) kombinierbar ist.

8. Rücklicht nach einem der Ansprüche 1 bis 7, **dadurch gekennzeichnet, daß** eine Moduleinheit (11) für eine Spannungsversorgung in einem Raum zwischen einem Reflektorabschnitt (15) und einer Gehäuserückwand (12) angeordnet ist.

9. Rücklicht nach einem der Ansprüche 1 bis 8, **dadurch gekennzeichnet, daß** das Leuchtmittel (2) von einer oder mehreren Leuchtdioden gebildet ist.

10. Rücklicht nach einem der Ansprüche 1 bis 9, **dadurch gekennzeichnet, daß** ein Schalter (13) für ein Ein- und Ausschalten des Kameramoduls (4) vorgesehen ist.

## Claims

1. Tail light for apparatuses for transportation on land, having a housing (1), a luminous and/or emitter means (2) and an attachment device (3) for fastening the housing (1) to a holder, wherein a camera module (4) with integrated signal processor for electric image processing is inserted into the housing (1), with a supply voltage input (6) of the camera module being able to be connected to a plug connector (7) on the housing, **characterized in that** the camera module (4) has a circuit for backlight correction and image stabilization and **in that** a video output (5) of the camera module (4) can be connected to the plug connector (7) on the housing (1).

2. Tail light according to Claim 1, **characterized in that** the camera module (4) comprises a signal processor main circuit board (8), to which a camera with a lens (10) which can be inserted into a cover (9) of the housing (1) can be connected.

3. Tail light according to Claim 1 or 2, **characterized in that** the camera module (4) comprises a mirror circuit.

4. Tail light according to one of Claims 1 to 3, **characterized in that** the camera module (4) comprises a zoom circuit.

5. Tail light according to one of Claims 1 to 4, **characterized in that** the camera module (4) and a luminous means (2) can be connected to a common voltage supply terminal (16).

6. Tail light according to one of Claims 1 to 5, **characterized in that** the camera module (4) comprises a lens (10) which can be inserted into a cover (9) of the housing (1) next to a reflector section (15).

7. Tail light according to one of Claims 1 to 6, **characterized in that** the camera module (4) comprises a lens (10) which can be combined with the luminous means (2).

8. Tail light according to one of Claims 1 to 7, **characterized in that** a module unit (11) for a voltage supply is arranged in a space between a reflector section (15) and a rear housing wall (12).

9. Tail light according to one of Claims 1 to 8, **characterized in that** the luminous means (2) is formed by one or more light-emitting diodes.

10. Tail light according to one of Claims 1 to 9, **characterized in that** a switch (13) is provided for switching the camera module (4) on and off.

## Revendications

1. Feu arrière pour appareils de transport terrestre, comportant un boîtier (1), un moyen d'éclairage et/ou projecteur (2) et un système de fixation (3) pour monter le boîtier (1) sur un support, dans lequel un module de caméra (4) avec processeur de signaux intégré est mis en place dans le boîtier (1) pour un traitement d'image électrique, une entrée de tension d'alimentation (6) du module de caméra pouvant être reliée avec un connecteur à fiches (7) sur le boîtier, **caractérisé en ce que** le module de caméra (4) présente un circuit de correction de contre-jour et un circuit de stabilisation d'image, et **en ce qu'**une sortie vidéo (5) du module de caméra (4) peut être reliée au connecteur à fiches (7) sur le boîtier (1).

2. Feu arrière selon la revendication 1, **caractérisé en ce que** le module de caméra (4) comprend une platine principale (8) de processeur de signaux sur laquelle peut être branchée une caméra avec un objectif (10) qui peut être mis en place dans un couvercle (9) du boîtier (1).

3. Feu arrière selon la revendication 1 ou 2, **caractérisé en ce que** le module de caméra (4) comprend un circuit de commande de miroir.

4. Feu arrière selon l'une des revendications 1 à 3, **caractérisé en ce que** le module de caméra (4) comprend un circuit de zoom.

5. Feu arrière selon l'une des revendications 1 à 4, **caractérisé en ce que** le module de caméra (4) et un moyen d'éclairage (2) peuvent être branchés à un branchement commun d'alimentation en tension (16).

6. Feu arrière selon l'une des revendications 1 à 5, **caractérisé en ce que** le module de caméra (4) comprend un objectif (10) qui peut être mis en place dans un couvercle (9) du boîtier (1) au voisinage d'un tronçon de réflecteur (15).

7. Feu arrière selon l'une des revendications 1 à 6, **caractérisé en ce que** le module de caméra (4) comprend un objectif (10) qui peut être combiné au moyen d'éclairage (2).

8. Feu arrière selon l'une des revendications 1 à 7, **caractérisé en ce qu'**une unité de module (11) pour une alimentation en tension est agencée dans un espace entre un tronçon de réflecteur (15) et une paroi postérieure de boîtier (12).

9. Feu arrière selon l'une des revendications 1 à 8, **caractérisé en ce que** le moyen d'éclairage (2) est formé par une ou plusieurs diodes électroluminescentes.

10. Feu arrière selon l'une des revendications 1 à 9, **caractérisé en ce qu'**un interrupteur (13) est prévu pour allumer et éteindre le module de caméra (4).
